Europäisches Patentamt

European Patent Office

Office européen des brevets

(19)

(11) Veröffentlichungsnummer: **0 080 571**
**B1**

## (12) EUROPÄISCHE PATENTSCHRIFT

(45) Veröffentlichungstag der Patentschrift:
31.07.85

(51) Int. Cl.⁴: **B 67 D 3/04**

(21) Anmeldenummer: **82108828.3**

(22) Anmeldetag: **24.09.82**

(54) **Absperrventil, insbesondere für unter Druck stehende karbonisierte Flüssigkeiten in Getränkeautomaten oder dergleichen.**

(30) Priorität: **02.12.81 DE 3147769**

(43) Veröffentlichungstag der Anmeldung:
**08.06.83 Patentblatt 83/23**

(45) Bekanntmachung des Hinweises auf die Patenterteilung:
**31.07.85 Patentblatt 85/31**

(84) Benannte Vertragsstaaten:
**AT BE CH GB IT LI**

(56) Entgegenhaltungen:
**DE - A - 1 909 562**
**GB - A - 790 140**
**GB - A - 1 261 384**
**US - A - 2 330 774**
**US - A - 3 291 441**

(73) Patentinhaber: **BOSCH-SIEMENS HAUSGERÄTE GMBH STUTTGART, Hochstrasse 17, D-8000 München 80 (DE)**

(72) Erfinder: **Färber, Karlheinz, Giegerweg 1, D-7928 Giengen (DE)**
Erfinder: **Nelzow, Hartmann, Am Finkenherd 10, D-1000 Berlin 20 (DE)**
Erfinder: **Giebner, Wolfgang, Heidenheimerstrasse 91, D-7928 Giengen (DE)**

## Beschreibung

Die Erfindung betrifft ein Absperrventil, insbesondere für unter Druck stehende karbonisierte Flüssigkeiten in Getränkeautomaten oder dergleichen, mit einer nachgeschalteten Entspannungsvorrichtung in Form eines hohlkegelartigen Diffusors, in welchem ein in axialer Richtung verstellbarer Entspannungskegel angeordnet ist, dessen Steigung wenigstens annähernd der Steigung des Diffusors entspricht.

Sollen Absperrventile der genannten Art zum Dosieren und gleichzeitigen Entspannen von unter Druck stehenden karbonisierten Flüssigkeiten auf Atmosphärendruck verwandt werden, ist es erforderlich, diesen eine Entspannungsvorrichtung nachzuschalten, da anderenfalls durch Dissoziation große Mengen von dem in der karbonisierten Flüssigkeit gelösten $CO_2$-Gas in die Atmosphäre entweichen. Es ist daher für derartige Zwecke üblich, dem Absperrventil eine Entspannungsvorrichtung nachzuschalten, welche in bekannten Fällen als mit dem Absperrventil druckfest verbundenes separates Bauteil ausgebildet ist. Diese bekannten Entspannungsvorrichtungen sind jedoch verhältnismäßig aufwendig und groß ausgeführt und haben daher im Vergleich zum Absperrventil einen großen Raumbedarf und zudem ein beträchtliches Gewicht. Sie sind daher bei beschränkten Raumverhältnissen, wie das bei Getränkeautomaten im allgemeinen der Fall ist, nur schwer unterzubringen. Sie erfordern darüber hinaus einen verhältnismäßig großen Montageaufwand.

Aufgabe der vorliegenden Erfindung ist es daher, bei Absperrventilen der eingangs näher bezeichneten Art die Entspannungsvorrichtung zu vereinfachen und so zu verbessern, daß die damit ausgestatteten Absperrventile auf engstem Raum und bei geringstem Montageaufwand auf einfache Weise untergebracht werden können. Diese Aufgabe wird nach der vorliegenden Erfindung dadurch gelöst, daß die Entspannungsvorrichtung im Ausgang des Ventils angeordnet ist und deren Entspannungskegel mit mehreren von seinem Mantel ausgehenden Bohrungen versehen ist, welche in eine von dessen Basis ausgehende zentrale Bohrung einmünden.

Mit Hilfe der erfindungsgemäßen Ausbildung der Entspannungsvorrichtung ist es möglich, diese mit dem Absperrventil zu einem handlichen Bauteil zu kombinieren, welches sich insbesondere zum Einbau in Getränkeautomaten unter den dort im allgemeinen herrschenden beengten Raumverhältnissen eignet.

Eine vorteilhafte Weiterbildung des Gegenstandes der Erfindung wird dadurch erzielt, daß der Entspannungskegel an seiner Basis mit einem Gewindeeinsatz versehen ist, welcher in ein Muttergewinde am Ausgang des Diffusors einschraubbar ist.

Aufgrund der erfindungsgemäßen Ausbildung des Entspannungskegels läßt sich dessen Position gegenüber dem hohlkegelartigen Diffusor durch einfaches Verdrehen verstellen, wodurch es möglich ist, auf besonders einfache Weise eine Mengenregulierung für die aus dem Absperrventil austretenden karbonisierte Flüssigkeit zu erreichen.

Weitere, in den Ansprüchen gekennzeichnete vorteilhafte Merkmale der Erfindung sind in der nachfolgenden Beschreibung anhand eines in der Zeichnung vereinfacht dargestellten Absperrventils mit einer in dessen Ausgang sitzenden Entspannungsvorrichtung erläutert. Es zeigt

Fig. 1 ein als elektromagnetisch betätigtes Eckventil ausgebildetes Absperrventil mit einer in dessen Ausgang sitzenden Entspannungsvorrichtung aus einem hohlkegeligen Diffusor und einem Entspannungskegel, teilweise im Schnitt,

Fig. 2 den in den Ausgang des Absperrventils einsetzbaren hohlkegeligen Diffusor in gegenüber der Fig. 1 vergrößertem Maßstab, im Schnitt,

Fig. 3 den in den Diffusor einschraubbaren Entspannungskegel als Einzelteil, ebenfalls in vergrößertem Maßstab und

Fig. 4 eine Schnittansicht des Entspannungskegels nach Fig. 3, geschnitten in der durch die Pfeile IV in der Fig. 3 angedeuteten Schnittebene.

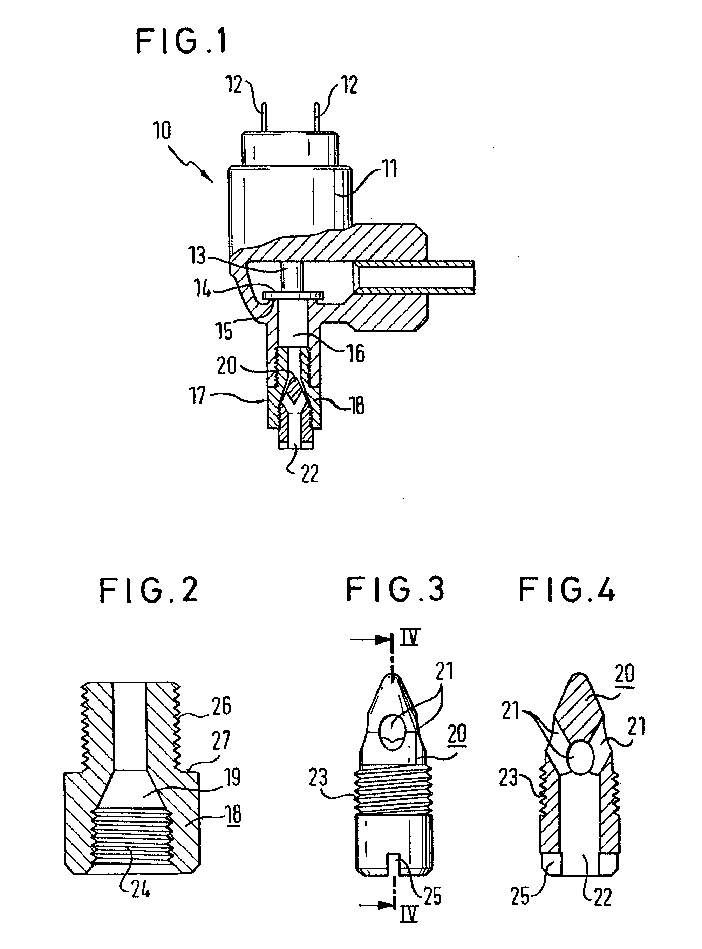

Ein in der Fig. 1 mit 10 bezeichnetes Absperrventil ist in Form eines elektromagnetisch betätigten Eckventils mit einem Gehäuse 11 ausgebildet, in dem eine mit Anschlußsteckern 12 versehene, nicht sichtbare Magnetspule in der üblichen Weise angeordnet ist. Bei Erregung des Magnetfeldes wirkt dieses auf einen Anker der über einen Stößel 13 einen Ventilteller 14 von einem Ventilsitz 15 abhebt und dabei den Ausgang 16 des Absperrventils 10 freigibt.

Im Ausgang 16 des Absperrventils 10 ist eine Entspannungsvorrichtung 17 angeordnet, welche aus einem Einsatz 18 mit einem hohlkegelartigen Diffusor 19 und einem darin in axialer Richtung verstellbaren Entspannungskegel 20 gebildet ist. Dabei entspricht die Steigung des hohlkegelartigen Diffusors 19 wenigstens annähernd der Steigung des Entspannungskegels 20.

Der Entspannungskegel 20 ist, wie insbesondere aus den Fig. 3 und 4 hervorgeht, mit mehreren von seinem Mantel ausgehenden Bohrungen 21 versehen, welche in eine von dessen Basis ausgehende zentrale Bohrung 22 einmünden. Der Entspannungskegel 20 ist ferner an seiner Basis mit einem Gewindeansatz 23 versehen, welcher in ein Muttergewinde 24 im Ausgang des Diffusors 19 im Einsatz 18 einschraubbar ist. Das freie Ende des Gewindeansatzes 23 am Entspannungskegel 20 ist darüber hinaus mit einem Schlitz 25 versehen, welcher zum formschlüssigen Ansetzen eines Werkzeuges, beispielsweise dem Blatt eines Schraubenziehers dient.

Der mit dem Diffusor 19 ausgestattete Einsatz 18 ist als ein mit einem Außengewinde 26 versehener Gewindenippel ausgebildet, der etwa in seiner Mitte einen Bund 27 aufweist.

Wie insbesondere aus der Fig. 1 erkennbar, ist der mit dem Diffusor 19 ausgestattete Einsatz 18 der Entspannungsvorrichtung mit dem Ausgang 16 des Absperrventils 10 über das Gewinde 26 verbunden. Der Entspannungskegel 20 ist dagegen mit seinem Gewindeansatz 23 in das Muttergewinde 24 in dem den Diffusor 19 aufweisenden Einsatz 18 einschraubbar. Das Einschrauben des Entspannungskegels 20 ist mit Hilfe eines in den Schlitz 25 eingesetzten Blattes eines Schraubendrehers auf einfache Weise möglich. Je nach der Einschraubtiefe kann dadurch der Spalt zwischen dem Diffusor 19 und der Kegelfläche des Entspannungskegels verändert und somit der Durchlaßquerschnitt variiert werden.

In Abwandlung des dargestellten und beschriebenen Ausführungsbeispieles kann auch vorgesehen sein, daß der im Ausgang des Absperrventils 10 sitzende Diffusor 19 in den Ausgang des Ventils eingeformt ist und so mit diesem eine Einheit bildet.

## Patentansprüche

1. Absperrventil, insbesondere für unter Druck stehende karbonisierte Flüssigkeiten in Getränkeautomaten oder dergleichen, mit einer nachgeschalteten Entspannungsvorrichtung (17) in Form eines hohlkegelartigen Diffusors (19), in welchem ein in axialer Richtung verstellbarer Entspannungskegel (20) angeordnet ist, dessen Steigung wenigstens annähernd der Steigung des Diffusors entspricht, dadurch gekennzeichnet, daß die Entspannungsvorrichtung (17) im Ausgang (16) des Ventils (10) angeordnet ist und der Entspannungskegel (20) mit mehreren von seinem Mantel ausgehenden Bohrungen (21) versehen ist, welche in eine von dessen Basis ausgehende zentrale Bohrung (22) einmünden.

2. Absperrventil nach Anspruch 1, dadurch gekennzeichnet, daß der Entspannungskegel (20) an seiner Basis mit einem Gewindeansatz (23) versehen ist, welcher in ein Muttergewinde (24) am Ausgang des Diffusors (19) einschraubbar ist.

3. Absperrventil nach Anspruch 2, dadurch gekennzeichnet, daß das freie Ende des Gewindeansatzes (23) als Aufnahme zum formschlüssigen Ansetzen eines Werkzeuges ausgebildet ist.

4. Absperrventil nach einem der vorhergehenden Ansprüche, dadurch gekennzeichnet, daß der Diffusor (19) als ein mit einem Außengewinde (26) versehener Einsatz (18) in Form eines Gewindenippels ausgebildet ist, der etwa in einer Mitte einen Bund (27) aufweist.

5. Absperrventil nach einem der vorhergehenden Ansprüche, dadurch gekennzeichnet, daß der hohlkegelartige Diffusor (19) in den Ausgang des Ventils (10) eingeformt ist.

## Claims

1. Shutoff valve, especially for liquids carbonized under pressure in automatic drink dispenser or the like, comprising a tension release device (17) connected a the outlet side in form of a diffuser (19) similar a hollow-cone, in which is disposed a tension release cone (20) adjustable in axial direction and whose slope corresponds at least approximately with the slope of the diffuser, characterized in that the tension release device (17) is disposed in the output (16) of the valve (10) and in that the tension release cone (20) is provided with several openings (21) between its surface and central opening (22) beginning on its basis.

2. Shutoff valve according to claim 1, characterized in that the tension release cone (20) is provided on its basis with a thread lug (23), which is screwable into a parent-thread (24) on the output of the diffuser (19).

3. Shutoff valve according to claim 2, characterized in that the free end of the tread lug (23) is formed as receiving-part for an joining formlocked of an instrument.

4. Shutoff valve according to one of the above mentioned claims, characterized in that the diffuser (19) is formed as an inset (18) provided with an out screw thread (26) in form of an thread nipple having about in its middle a tie (27).

5. Shutoff valve according to one of the above mentioned claims, characterized in that the diffuser (19) similar as a hollow-cone is arranged in the output of the valve (10).

## Revendications

1. Soupape d'arrêt, notamment pour des liquides sous pression contenant du gaz carbonique dans des appareils de distribution automatique de boissons ou des appareils similaires, comprenant un dispositif de détente (17), monté en aval sous forme d'un diffuseur (19) de type à cône creux, dans lequel est disposé un cône de détente (20) pouvant se déplacer suivant la direction axiale et dont la conicité correspond au moins approximativement à la conicité du diffuseur, caractérisée en ce que le dispositif de détente (17) est disposé à la sortie (16) de la soupape (10) et le cône de détente (20) est muni de plusieurs perçages (21) prenant naissance dans sa surface latérale et débouchant dans un perçage central (22) issue de sa base.

2. Soupape d'arrêt suivant la revendication 1, caractérisée en ce que le cône de détente (20) est muni sur sa base d'une embase filetée (23), qui peut se visser dans la partie femelle taraudée (24) à la sortie du diffuseur (19).

3. Soupape d'arrêt suivant la revendication 2, caractérisée en ce que l'extrémité libre de l'embase filetée (23) est constituée en organe de réception pour l'application d'un outil par complémentarité de forme.

4. Soupape d'arrêt suivant l'une des revendications précédentes, caractérisée en ce que le diffuseur (19) est constitué en pièce d'insertion (18) munie d'un filetage extérieur (26), sous forme d'un raccord fileté, qui présente un épaulement (27) à peu près au milieu.

5. Soupape d'arrêt suivant l'une des revendications précédentes, caractérisée en ce que le diffuseur (19) de type à cône creux est formé dans la sortie de la soupape (10).

# FIG.1

# FIG.2

# FIG.3

# FIG.4